# EUROPÄISCHE PATENTANMELDUNG

(11) **EP 1 630 021 A2**
(43) Veröffentlichungstag der Anmeldung: **01.03.2006**
(21) Anmeldenummer: 05014735.4
(22) Anmeldetag: 07.07.2005
(51) Int. Cl.: B60J 7/14

(54) **Cabriolet-Fahrzeug mit zumindest zwei Lenkern zur Dachbewegung**

(30) Priorität: 24.08.2004 DE 102004040889
(71) Anmelder: Wilhelm Karmann GmbH, 49084 Osnabrück (DE)
(72) Erfinder: Budzinski, Thorsten, 49525 Lengerich (DE)

(57) **Zusammenfassung**

Ein Cabriolet-Fahrzeug (1) mit einem eine Heckscheibe (6) umfassenden rückwärtigen Dachteil (4) und mit zumindest einem diesem bei geschlossenem Dach (3) in Fahrtrichtung (F) vorgeordneten Dachteil (5), wobei ein erster Lenker (10), häufig auch als Hauptführungsstange bezeichnet, sich von einer unterhalb einer Fensterbrüstungslinie (7) liegenden Anlenkung (12) in den Übergangsbereich (9) zwischen dem rückwärtigen (4) und dem vorgeordneten Dachteil (5) erstreckt und in seinem Verlauf mit dem rückwärtigen Dachteil (4) verbunden ist und wobei sich ein zweiter Lenker (11), häufig auch als Führungsstange bezeichnet, von einem unterhalb der Fensterbrüstungslinie (7) zu einem gegenüber der oberen Anlenkung (13) des ersten Lenkers (10) in Fahrtrichtung (F) weiter vorne liegenden Bereich des vorgeordneten Dachteils (5) erstreckt und während der beginnenden Öffnung von außen sichtbar ist und wobei beide Lenker (10;11) bei der beginnenden Dachöffnung gegeneinander öffnen, wird so ausgebildet, daß zumindest ein mittlerer Bereich des zweiten Lenkers (11) gegenüber einem mittleren Bereich des ersten Lenkers (10) in Fahrzeugquerrichtung weiter außen gelegen ist (Fig. 3).

## Beschreibung

Die Erfindung betrifft ein Cabriolet-Fahrzeug mit einem rückwärtigen und zumindest einem vorgeordneten Dachteil, die über Lenker mit der Karosserie verbunden sind, nach dem Oberbegriff des Anspruchs 1.

Bei solchen Cabriolet-Fahrzeugen ist es bekannt, das Dach insgesamt an jeder Fahrzeugseite über zwei Lenker schwenkbeweglich an der Karosserie zu halten. Beide Lenker sind jeweils unterhalb der Fensterbrüstungslinie mittelbar oder unmittelbar an der Karosserie beweglich gehalten. Der während der Bewegung hintere der beiden Lenker wird auch als Hauptführungsstange bezeichnet und erstreckt sich mit seinem oberen Ende bis in den Übergangsbereich zwischen den genannten Dachteilen; er ist fest mit dem rückwärtigen Dachteil verbunden, kann also auch Bestanteil dieses Dachteils sein, da keine Relativbewegung zwischen dem rückwärtigen Dachteil und der Hauptführungsstange erforderlich ist.

Der vordere Lenker wird auch als Führungsstange bezeichnet und ist mit seinem oberen Ende an dem vorgeordneten Dachteil in Fahrtrichtung vor der Anlenkung der Hauptführungsstange angelenkt. Die Führungsstange taucht während der Dachöffnung aus einer Schlitzaufnahme, in der sie bei geschlossenem Dach gehalten ist, heraus und wird von der Seite her sichtbar. Diese Schlitzaufnahme erfordert einerseits eine sie begrenzende Verkleidung zum Fahrzeuginnenraum hin und andererseits nach quer außen hin eine weitere Verkleidung zur Abdeckung der bei geschlossenem Dach im wesentlichen außen neben der Führungsstange gelegenen Hauptführungsstange. Der Verkleidungsaufwand ist daher hoch. Zudem sind die zulässigen Toleranzen gering, um bei der Bewegung der Führungsstange gegenüber den Verkleidungen ein schabendes Kontaktieren zu verhindern.

Der Erfindung liegt das Problem zugrunde, bei einem gattungsgemäßen Cabriolet-Fahrzeug die oben genannten Nachteile möglichst weitgehend zu vermeiden.

Die Erfindung löst dieses Problem durch ein Cabriolet-Fahrzeug mit den Merkmalen des Anspruchs 1. Hinsichtlich weiterer vorteilhafter Ausgestaltungen der Erfindung wird auf die abhängigen Ansprüche 2 bis 9 verwiesen.

Dadurch, daß erfindungsgemäß zumindest ein mittlerer Bereich des zweiten Lenkers (Führungsstange) gegenüber einem mittleren Bereich des ersten Lenkers (Hauptführungsstange) in Fahrzeugquerrichtung weiter außen gelegen ist, kann bei geschlossenem Dach dieser mittlere Bereich der Führungsstange nur nach innen hin verkleidet sein, wobei diese Verkleidung dann gleichzeitig auch die fest dem hinteren Dachteil zugeordnete Hauptführungsstange abdeckt. Nach außen hin ist hingegen keine gesonderte Verkleidung erforderlich; der Verkleidungsaufwand ist daher verringert.

Insbesondere ist nach außen gar keine Verkleidung erforderlich, wenn der mittlere Bereich den gesamten Verlauf der Führungsstange zwischen der Fensterbrüstungslinie und ihrer dachseitigen Anbindung umfaßt.

Der mittlere Bereich der Führungsstange kann bei geschlossenem Dach zwischen einer die Hauptführungsstange gegenüber dem Fahrzeuginnenraum abdeckenden Verkleidung und einem äußeren Rahmenteil des Daches aufgenommen sein, so daß zudem die Anforderungen an die Toleranzen minimal sind, da der äußere Rahmenteil nicht dicht an der Führungsstange anliegen muß. Die Platzverhältnisse sind dadurch begünstigt, daß quer außen von der Führungsstange kein Ablageraum mehr für die Hauptführungsstange geschaffen werden muß.

Vorteilhaft kann die Führungsstange bei geschlossenem Dach hinter einer dem Rahmenteil zugeordneten Dichtung von außen verborgen sein und muß dann nicht bis hinter feste Teile des Dachrahmens tief eintauchen, um optisch unsichtbar zu sein.

Wenn die Hauptführungsstange über ihren Verlauf in Fahrzeugquerrichtung gebogen ist, kann die Schwenkanbindung beider Lenker wie gewohnt angeordnet sein und ohne Änderung der Kinematik erfolgen.

Insbesondere können die unterhalb der Fensterbrüstungslinie liegenden Anlenkungen der Führungsstange und der Hauptführungsstange bezüglich der Fahrtrichtung auch weiterhin zumindest nahezu fluchtend hintereinander liegen, ohne zusätzlichen Bauraum in Fahrzeugquerrichtung zu beanspruchen.

Führungs- und Hauptführungsstange können ein Parallelogramm oder mit ihren oberen und unteren Anlenkungen zumindest ein Viergelenk bilden.

Mit der Erfindung können der rückwärtige und der vorgeordnete Dachteil jeweils als zumindest im wesentlichen starre und bezüglich ihrer Außenflächen voneinander separate Baueinheiten ausgebildet sein, so daß die Erfindung insbesondere auf sog. Retractable Hardtops anwendbar ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, vorne abgebrochene und leicht perspektivische Ansicht von schräg vorne eines erfindungsgemäßen Cabriolet-Fahrzeugs bei geschlossenem Dach,

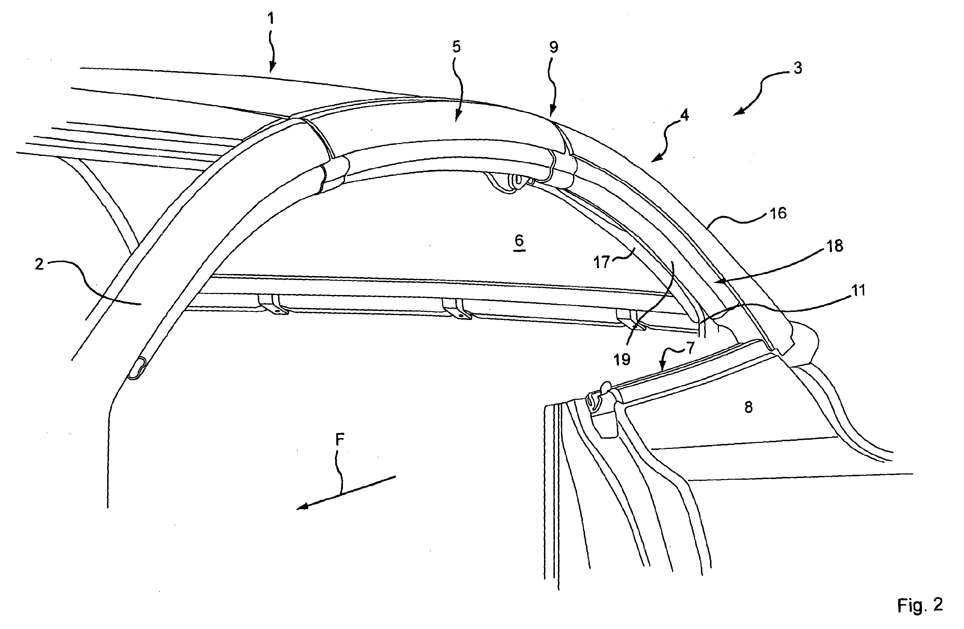

- Fig. 2: eine mehr in Richtung des Fahrzeughecks schauende Ansicht einer Ausschnittsvergrößerung des geschlossenen Daches des Fahrzeugs nach Fig. 1,

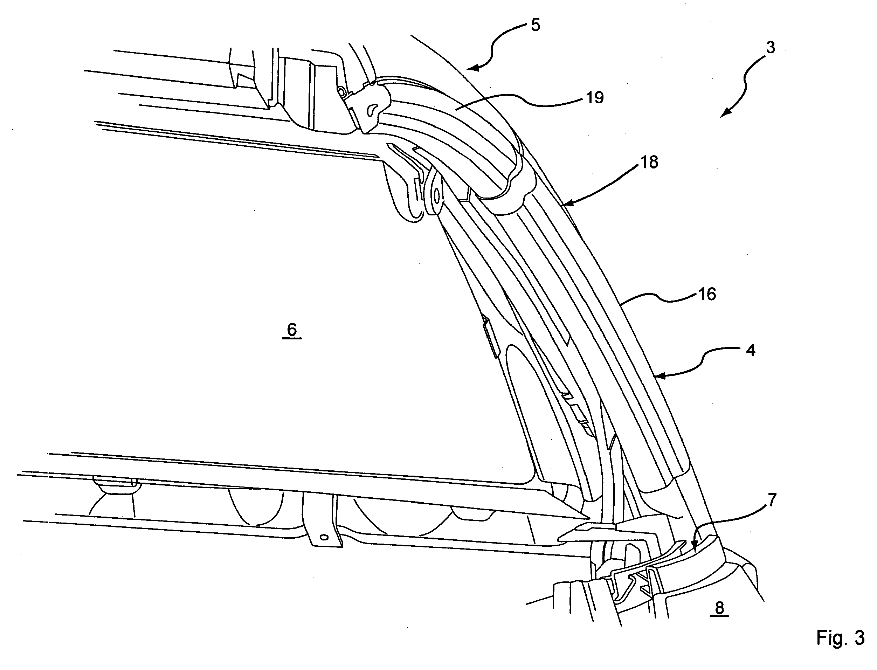

- Fig. 3: eine noch weiter in Richtung des Fahrzeughecks und fast parallel zur Fahrzeuglängsrichtung gedrehte Ansicht des geschlossenen Daches bei einer Ausschnittsvergrößerung der von der Karosserie aufragenden Hauptsäule des Daches,

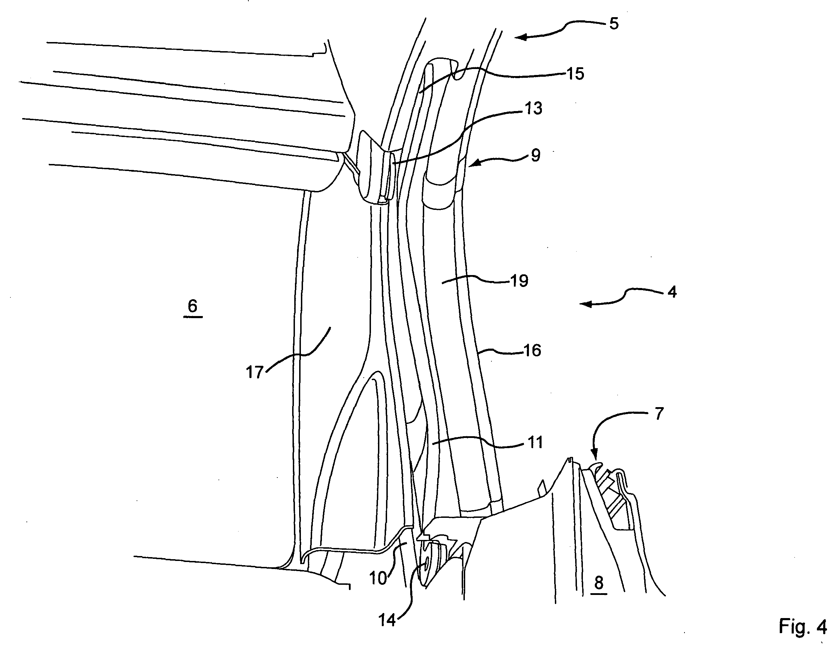

- Fig. 4: eine ähnliche Ansicht wie Fig. 3 bei weiter fortgesetzter Drehung mit einem Blickwinkel von schräg innen,

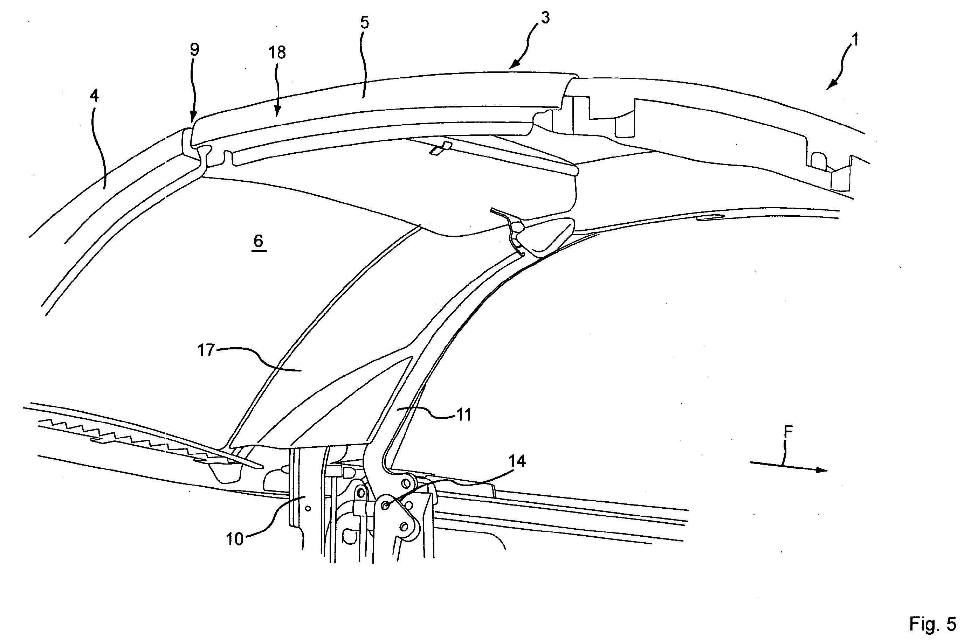

- Fig. 5: eine ähnliche Ansicht wie Fig. 4 bei weiter fortschreitender Drehung des Blickwinkels,
- Fig. 6: eine ähnliche Ansicht wie Fig. 5 bei beginnender Dachöffnung,
- Fig. 7: eine ähnliche Ansicht wie Fig. 6, jedoch ohne Verkleidungsteile,
- Fig. 8: eine Ansicht von schräg unten in Fahrzeuglängsrichtung auf den hinteren Bereich des geschlossenen Daches.

Das erfindungsgemäße Cabriolet-Fahrzeug 1 kann sowohl, wie im gezeichneten Ausführungsbeispiel angedeutet, ein mit einer Rückbank versehenes vier- oder fünfsitziges Fahrzeug als auch ein Zweisitzer sein.

Dabei bildet im Ausführungsbeispiel das bewegliche und in geschlossener Stellung mittelbar oder unmittelbar an einen Windschutzscheibenrahmen 2 anschließende Dach 3, wie hier dargestellt, separate und in sich starre oder mit zumindest jeweils einem starren Rahmen versehene Dachteile 4, 5 aus.

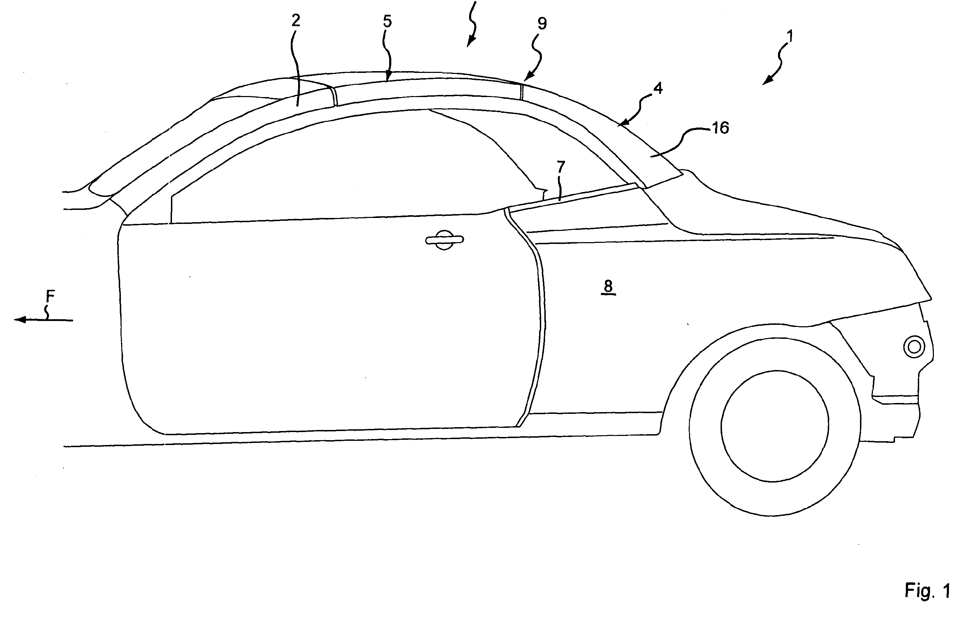

Der rückwärtige Dachteil 4 umfaßt eine Heckscheibe 6 und ragt von einer Fensterbrüstungslinie 7 der Karosserie 8 in geschlossener Stellung (Fig. 1) schräg nach vorne aufwärts.

Dem rückwärtigen Dachteil 4 ist bei geschlossenem Dach in Fahrtrichtung F zumindest ein weiterer Dachteil 5 vorgeordnet, der hier im wesentlichen horizontal über einem Insassenraum liegt und bei geöffnetem Dach 3 oberhalb des rückwärtigen Dachteils 4 gelegen ist. Weitere nach vorne anschließende Dachteile (nicht gezeichnet) sind möglich. Der Dachteil 4 kann auch ein ebenfalls nicht gezeichnetes Schiebedach umfassen. Beide Dachteile 4, 5 sind im Übergangsbereich 9 gegeneinander schwenkbar und über Gelenke oder dergleichen miteinander verbunden.

Das Dach 3 kann manuell oder voll- oder teilautomatisch zu bewegen sein.

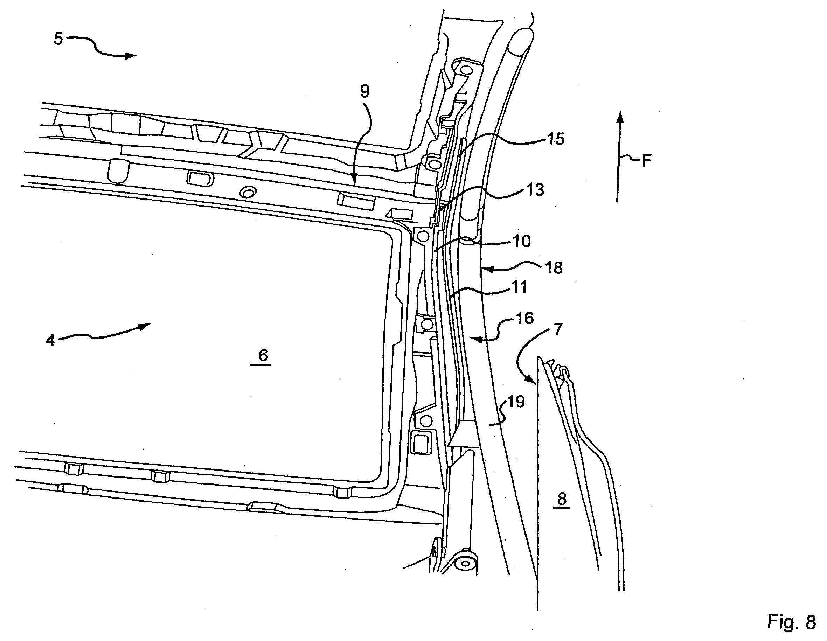

Wie beispielsweise in Fig. 8 deutlich wird, sind an jeder Fahrzeugquerseite für die Bewegung des Daches 3 zwei Lenker 10, 11, die hier als durchgehende Stahlkörper ausgebildet sind, vorgesehen. An einem dieser Lenker 10, 11 kann auch ein möglicher Antrieb angreifen.

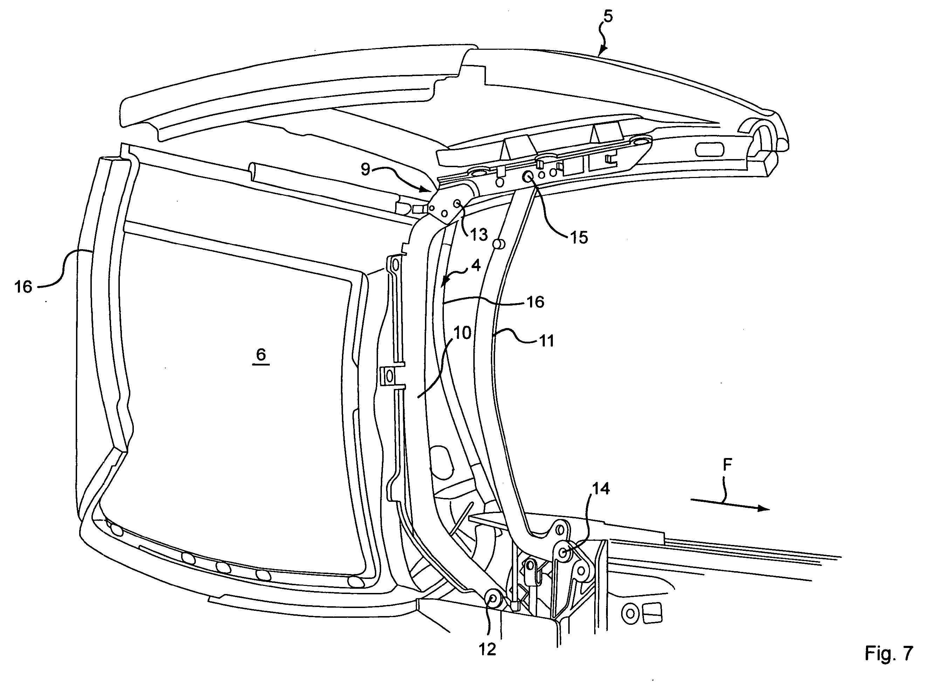

Der erste Lenker 10 wird häufig auch als Hauptführungsstange bezeichnet. Er erstreckt sich von einer unterhalb der Fensterbrüstungslinie 7 gelegenen Anlenkung 12 (Fig. 7), hier einem Gelenk mit nur einem Freiheitsgrad und einer quer zum Fahrzeug 1 erstreckten Schwenkachse, seitlich und parallel zur Heckscheibe 6 aufwärts bis zu einer oberen Anlenkung 13 im Übergangsbereich 9 zwischen den Dachteilen 4 und 5. Der Lenker 10 ist fest mit dem hinteren Dachteil 4 verbunden und daher gegenüber diesem unbewegt, kann also auch einstückiger Bestandteil des hinteren Dachteils 4 sein.

Der zweite Lenker 11 wird häufig auch als Führungsstange bezeichnet. Er erstreckt sich von einer unterhalb der Fensterbrüstungslinie 7 gelegenen Anlenkung 14 (Fig. 7), hier ebenfalls einem Gelenk mit nur einem Freiheitsgrad und einer quer zum Fahrzeug 1 liegenden Schwenkachse, seitlich in Fahrtrichtung F vorwärts und aufwärts bis zu einer oberen Anlenkung 14, die der Anlenkung 13 der Hauptführungsstange 10 in Fahrtrichtung F vorgeordnet ist.

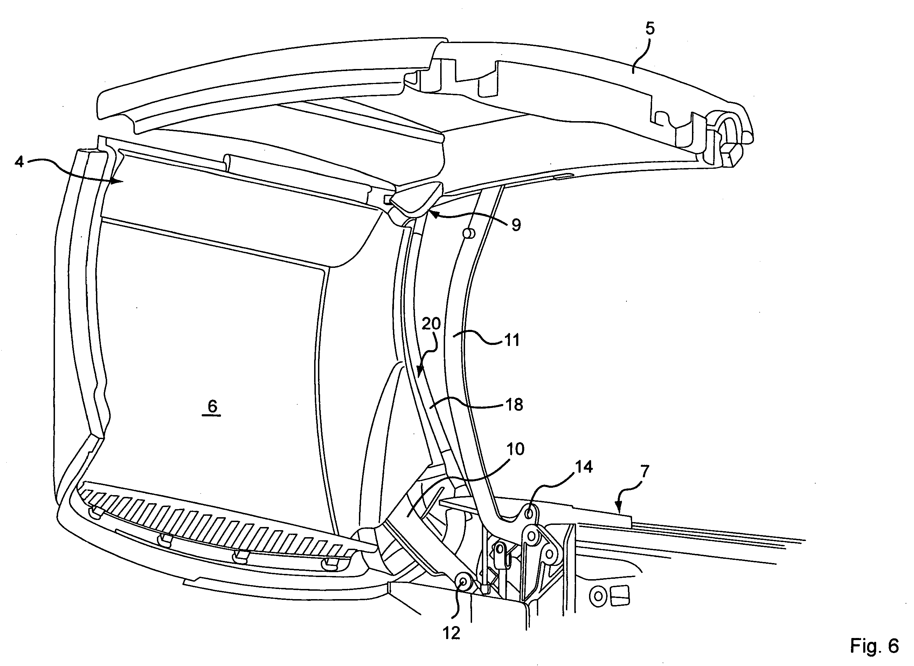

Die Lenker 10 und 11 liegen bei geschlossenem Dach 3 parallel zueinander neben der Heckscheibe 6 innerhalb der sog. C-Säule 16. Sie öffnen bei der beginnenden Dachöffnung nach Art eines Parallelogramms. Dabei müssen sie kein Parallelogramm im eigentlichen Sinne bilden, sondern können auch unter einem Winkel gegeneinander verlaufen. Die unteren Anlenkungen 12, 14 und die oberen Anlenkungen 13, 15 bilden ein Viergelenk aus, wodurch der vorgeordnete Dachteil 5 bei der Dachöffnung seine horizontale Orientierung zumindest nahezu beibehalten kann. Zumindest die oberen Anlenkungen 13, 15 liegen unterhalb einer Verkleidung (Fig. 6) und sind daher vom Innenraum aus nicht sichtbar. Die unteren Anlenkungen 12, 14 liegen im Seitenteil der Karosserie und sind daher ebenfalls optisch verdeckt.

Der erste Lenker 10 liegt in seinem über den Verlauf mittleren Bereich hinter einer Verkleidung 17, die diesen seitlich und nach vorne gegenüber dem Innenraum abdeckt. In Querrichtung zumindest mit seinem mittleren Bereich weiter außen und neben der Verkleidung 17 liegt bei geschlossenem Dach 3 der zweite Lenker 11. Der Lenker 11 ist in dieser Stellung in einem Schacht 20 zwischen der Verkleidung 17 und dem äußeren Rahmenteil 18 des Daches 3 aufgenommen. Dabei muß der Lenker 11 insofern nicht tief in den Schacht 20 eintauchen, als er zumindest teilweise auch von der den Dachrahmen 18 außenseitig begrenzenden Dichtung 19, gegen die die Seitenscheiben laufen, verdeckt sein kann.

Bei Öffnung des Daches 3 taucht der vordere Lenker 11 während der angesprochenen parallelogrammartigen Öffnung der Lenker 10, 11 aus dem Schacht heraus (Fig. 6, Fig. 7) und wird dadurch auch von der Fahrzeugseite her sichtbar, wohingegen er bei geschlossenem Dach nur bei direktem Einblick von vorne in den Aufnahmeschacht (Fig. 8) sichtbar ist.

Der mittlere Bereich des Lenkers 11 umfaßt hier ungefähr seinen gesamten Bereich, der bei geschlossenem Dach 3 oberhalb der Fensterbrüstungslinie 7 der Karosserie 8 liegt. Die unteren Anbindungen 12, 14 der beiden Lenker 10, 11 können hingegen, da der Lenker 11 über seinen Verlauf gebogen, abgekantet oder abgekröpft sein kann, mehr oder weniger fluchtend hintereinander liegen. Je nach Ausbildung kann dies auch für die oberen Anlenkungen 13, 15 gelten, wobei im hier gezeichneten Ausführungsbeispiel die Anlenkung 15 der Führungsstange 11 gegenüber der Anlenkung 13 der Hauptführungsstange 10 in Fahrzeugquerrichtung weiter außen liegt. Für eine einfache Umformbarkeit des Lenkers 11 kann dieser insbesondere als ein zwischen seiner unteren 13 und oberen Anlenkung 15 durchgehendes Stahlbauteil gebildet sein.

Der mittlere Bereich der Führungsstange 11, der hier seinen ganzen während der Dachöffnung sichtbaren Bereich umfaßt, liegt in jedem Fall - anders als bei bisher bekannten Lösungen - seitlich quer außerhalb der Hauptführungsstange 10 und benötigt daher keine eigene Verkleidung.

## Patentansprüche

1. Cabriolet-Fahrzeug (1) mit einem eine Heckscheibe (6) umfassenden rückwärtigen Dachteil (4) und mit zumindest einem diesem bei geschlossenem Dach (3) in Fahrtrichtung (F) vorgeordneten Dachteil (5), wobei ein erster Lenker (10), häufig auch als Hauptführungsstange bezeichnet, sich von einer unterhalb einer Fensterbrüstungslinie (7) liegenden Anlenkung (12) in den Übergangsbereich (9) zwischen dem rückwärtigen (4) und dem vorgeordneten Dachteil (5) erstreckt und in seinem Verlauf mit dem rückwärtigen Dachteil (4) verbunden ist und wobei sich ein zweiter Lenker (11), häufig auch als Führungsstange bezeichnet, von einem unterhalb der Fensterbrüstungslinie (7) zu einem gegenüber der oberen Anlenkung (13) des ersten Lenkers (10) in Fahrtrichtung (F) weiter vorne liegenden Bereich des vorgeordneten Dachteils (5) erstreckt und während der beginnenden Öffnung von außen sichtbar ist und wobei beide Lenker (10;11) bei der beginnenden Dachöffnung nach Art eines Parallelogramms gegeneinander öffnen,
**dadurch gekennzeichnet,**
**daß** zumindest ein mittlerer Bereich des zweiten Lenkers (11) gegenüber einem mittleren Bereich des ersten Lenkers (10) in Fahrzeugquerrichtung weiter außen gelegen ist.

2. Cabriolet-Fahrzeug (1) nach Anspruch 1
**dadurch gekennzeichnet,**
**daß** der mittlere Bereich der Führungsstange (11) bei geschlossenem Dach zwischen einer die Hauptführungsstange (10) gegenüber dem Fahrzeuginnenraum abdeckenden Verkleidung (17) und einem äußeren Rahmenteil des Daches (3) aufgenommen ist.

3. Cabriolet-Fahrzeug (1) nach einem der Ansprüche 1 oder 2,
**dadurch gekennzeichnet,**
**daß** die Führungsstange (11) bei geschlossenem Dach (3) zumindest teilweise hinter einer dem Rahmenteil (18) zugeordneten Dichtung (19) von außen verborgen ist.

4. Cabriolet-Fahrzeug (1) nach einem der Ansprüche 1 bis 3,
**dadurch gekennzeichnet,**
**daß** der mittlere Bereich den gesamten Verlauf der Führungsstange (11) zwischen der Fensterbrüstungslinie (7) und ihrer dachseitigen Anbindung (15) umfaßt.

5. Cabriolet-Fahrzeug (1) nach einem der Ansprüche 1 bis 4,
**dadurch gekennzeichnet,**
**daß** die Führungsstange (11) über ihren Verlauf in Fahrzeugquerrichtung gebogen, abgekantet oder abgekröpft ist.

6. Cabriolet-Fahrzeug (1) nach Anspruch 5,
**dadurch gekennzeichnet,**
**daß** die unterhalb der Fensterbrüstungslinie (7) liegenden Anlenkungen (14;12) der Führungsstange (11) und der Hauptführungsstange (10) bezüglich der Fahrtrichtung (F) zumindest nahezu fluchtend hintereinander liegen.

7. Cabriolet-Fahrzeug (1) nach einem der Ansprüche 1 bis 6,
**dadurch gekennzeichnet,**
**daß** die Führungs- (11) und die Hauptführungsstange (10) jeweils als zwischen ihrer dachseitigen (15;13) und ihrer karosserieseitigen Anbindung (14;12) durchgehende Stahlbauteile gebildet sind.

8. Cabriolet-Fahrzeug (1) nach einem der Ansprüche 1 bis 7,
**dadurch gekennzeichnet,**
**daß** Führungs- (11) und Hauptführungsstange (10) ein Parallelogramm bilden.

9. Cabriolet-Fahrzeug (1) nach einem der Ansprüche 1 bis 8,
**dadurch gekennzeichnet,**
**daß** der rückwärtige (4) und der vorgeordnete Dachteil (5) jeweils als zumindest im wesentlichen starre und bezüglich ihrer Außenflächen voneinander separate Baueinheiten ausgebildet sind.
